# EUROPEAN PATENT APPLICATION

(11) **EP 1 176 059 A2**
(43) Date of publication of application: **30.01.2002**
(21) Application number: 01500184.5
(22) Date of filing: 13.07.2001
(51) Int. Cl.: B60R 13/08, B60R 13/02

(54) **Acoustic vehicle roof**

(30) Priority: 25.07.2000 ES 200001860
(71) Applicant: Grupo Antolin Ingenieria, S.A., E-09007 Burgos (ES)
(72) Inventor: Cremades Schultz, Alberto, c/o Grupo Antolin-Ing., 09007 Burgos (ES); Sanchez Lite, Alberto, c/o Grupo Antolin-Ing., 09007 Burgos (ES)
(74) Representative: Carpintero Lopez, Francisco

(57) **Abstract**

The acoustic vehicle roof forms a single unit which is attached by an adhesive to the body (1) of the vehicle, with the roof comprising a self-supporting liner (3), a damping element (4) and a flexible element (5) which is placed between these and which joins them, forming a single unit; once this unit is attached by an adhesive (6) to the vehicle body (1) by the free face of the damping element (4), it dampens the vibrations of vehicle body (1), stiffens the roof and is a support for several accessories such as handholds, parasols, etc. and as a decorative element for the interior of the vehicle.

## Description

### OBJECT OF THE INVENTION

The present invention relates to a lining (or inner coating) for an acoustic vehicle roof, particularly for motor vehicles. One of the main characteristic of this roof is that it includes means for reducing the vibrations of the roof as a whole, as well as means which absorb noises produced inside the vehicle and which are due to roof body vibrations which have not been eliminated by the former means.

The object of the invention is to provide the automobile industry with a roof integrating the lining, damping means for reducing vibrations and a means which also serves as a flexible union between the damping means and the roof lining. Thus, the roof lining of the invention solves the problems which result from the acoustic radiation of a car roof and which is due to the vibration level of said roof and the frequencies of said vibrations, so that with the means incorporated in the roof the radiation levels are reduced and the acoustic field of the vehicle interior is adjusted so that the acoustic comfort as well as the appearance of the roof are improved.

### BACKGROUND OF THE INVENTION

As is well known, many noises are produced in the inside of a vehicle which result mainly from the acoustic radiation of the roof body, particularly from the flat plate which covers it, with this being caused by the vibrations of the roof itself. After being radiated the acoustic field created depends mainly on the structure and vibrational modes of the body, and more specifically of the roof, and on the internal geometry of the interior, as well as on the acoustic absorption capabilities of the materials which form said interior.

A car roof is excited by many factors that produce resonance in its natural frequencies. Therefore, a reduction in the amplitude of vibrations at the resonance frequencies and an increase of the damping levels and/or changing the roof's resonance frequencies to places where the roof is not excited (or is less so) can obviously reduce these vibration levels and the corresponding acoustic radiation.

Although damping materials are known which can greatly reduce the vibrations of a vehicle roof, among which maybe mentioned those of high weight (bituminous masses) or those providing stiffness (cardboard, layered foam composites, rolled steel plate bars, etc.), it is also true that no product is known that can act simultaneously as a damping and as an absorbent element, and which is mounted with the lining as a single unit, as these elements have always been used separately. That is, elements or components are known which are placed at certain areas of the vehicle interior in order to improve its internal acoustics, for which materials are used such as polyethylene, polyurethane, cardboard, plastics and others. Also known are damping materials or elements to reduce the vibrations of the roof and to increase its stiffness, and which in the case of the bituminous materials used normally or steel plate bars imply a considerable increase in weight in an area where this is not desirable and are always an independent product or material from the aforementioned absorbing element.

In addition, a roof lining is currently used in vehicles which is self supporting and which incorporates accessories such as lamps, handholds, parasols, etc. so that the roof lining and its accessories form a unit which is mounted directly on the vehicle body. A quick mount is provided by clips that lock in orifices provided in the vehicle body for this purpose.

Therefore, the main advantage provided by the invention is that it incorporates the acoustic improvement functions in a single unit, by adding them to the general functions of a self supporting roof lining and thus simplifying the problems related to unit assembly (fast attachments, absorbing mounting tolerances, self centering, etc.).

### DESCRIPTION OF THE INVENTION

The acoustic roof disclosed applicable to vehicles is based on reducing the acoustic levels of the interior of the vehicle by integrating an element which has a good absorbent-acoustic behaviour, as well as serving aesthetic functions and as a support for several functions which improve the comfort and safety of the vehicle.

More specifically, the acoustic roof of the invention is meant to simplify the handling, centering and positioning of said roof in the assembly operation on the vehicle interior, as well as fulfilling other functions such as thermal, decorative, safety, etc.

For this purpose, the roof disclosed comprises three differentiated parts, one corresponding to the lining whose functions are decorative, of acoustic absorption and as a support for the above mentioned accessories. A second part corresponds to a damping part attached to the vehicle body meant to improve the acoustic and vibration properties of the assembly; and a third part which consists of an element which is flexible in all directions, and which is placed between the other two parts so that it isolates the functions of each one; in addition, due to its flexibility and adaptability it simplifies the assembly and adaptation of the unit in the vehicle interior, helps in it positioning and allows a correct and uniform transmission of the pressure required for attaching it.

The unit formed by these three parts has the particular characteristic that the damping element is glued to the car body roof and the lining is attached to this damping element by means of the intermediate absorbing element. The latter is therefore attached to both the damping element and to the self supported lining, forming a unit which is finally secured by the securing clips used to mount the self supporting lining, with the means which secure the intermediate attachment element between the damping element and the self supporting liner are weaker than those used to attach the damping element to the vehicle body, so that the self supporting liner can be removed, either as an independent element or with the intermediate union element, without damaging the behaviour of the damping element nor its union to the body.

The main characteristic of the invention is therefore that the self-supporting liner mounted as the inner lining of a vehicle roof incorporates several functions in a single unit, as it includes the damping elements, the noise absorption elements and the lining itself, allowing a simple assembly onto the vehicle body.

### DESCRIPTION OF THE DRAWINGS

The characteristics of the present invention will be understood more clearly in view of the accompanying drawings of a preferred embodiment, where for purposes of illustration only and in a non-limiting manner the following is shown:

Figure 1 shows a schematic view of a cross section of the acoustic roof in accordance with the object of the invention, ready to be attached to the vehicle roof.

Figure 2 shows a sectional view as in the previous figure where the acoustic roof of the invention is ready to be attached to the vehicle body metal, without having applied the pressure by which the final securing is achieved.

Figure 3 shows another view similar to the previous one but in which the roof is fully attached after being pressed against the vehicle body.

Figure 4 shows another sectional view with the self-supporting roof lining is separated from the union element, with the damping element still attached to the vehicle body.

### PREFERRED EMBODIMENT OF THE INVENTION

As may be seen in the figures, the acoustic roof of the invention is meant to be attached to the inner side of the body (1) of a vehicle, and is complemented by lateral crossbars (2), all of this as is conventional, with the particular characteristic that the roof in question consists of a self-supporting liner (3), as is also conventional and which includes the pre-assembled accessories to be attached to body (1). This self supporting liner (3) is complemented by a damping element (4) meant to be directly fixed onto body (1) and by an intermediate element (5) which acts as a flexible means of joining the two prior elements when placed between them.

The damping element (4) is meant to improve the vibrational and acoustic behaviour of the roof assembly, so that once it is mounted it is permanently glued onto body (1). This damping element may be made from cardboard, composites, etc.

On the other hand, union element (5) is made of an acoustically absorbing material such as PET, cardboard, plastic, etc. such that the union element (5) joins lining (3) to damping element (4), with this union being secure enough to allow handling the assembly without any components being detached and flexible enough to isolate lining (3) from the vibrations which arrive from body (1), so that in order to form the assembly any kind of adhesives, ultrasound, etc. may be used as long as they meet the requirements of each manufacturer.

Assembly of these elements and the assembly as a whole on body (1) is performed as follows:

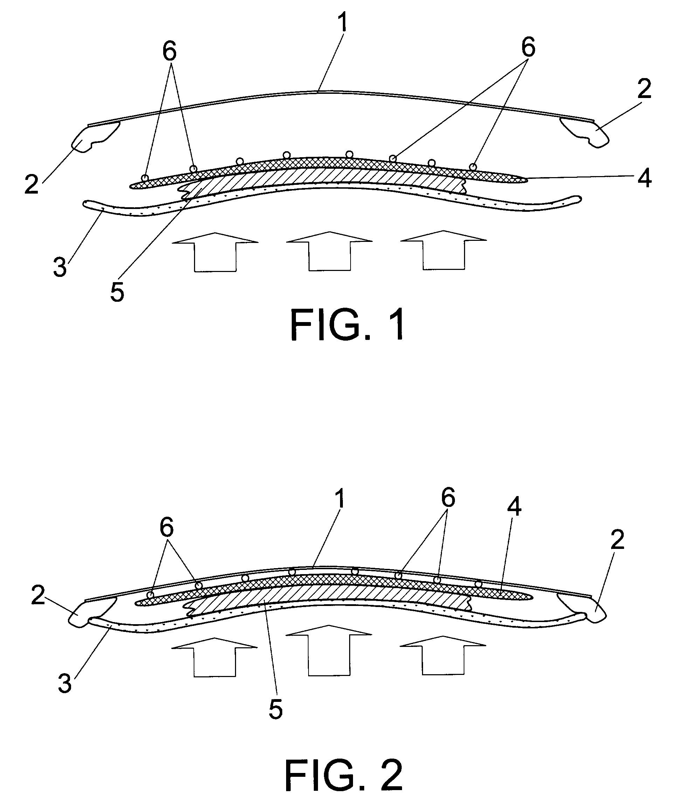

Firstly there is a pre-assembly outside the vehicle, for which the absorption or union element (5) is attached to the self supporting liner (3) and the free face of said absorption or union element (5) is then attached to the damping element (4), providing the latter with an adhesive on its free end which may be in the form of strings (6) as shown in the figures or in any other arrangement or amount desired, so that the unit thus pre-assembled outside the vehicle is introduced in said vehicle and positioned under body (1), as shown in figure 2. The assembly is then pressed against the body (1) so that it is perfectly attached to it by the adhesive (6) on the damping element (4). Once the assembly is thus mounted a final securing is obtained by clips which pass through the lining or by any other means of securing the lining to the vehicle roof.

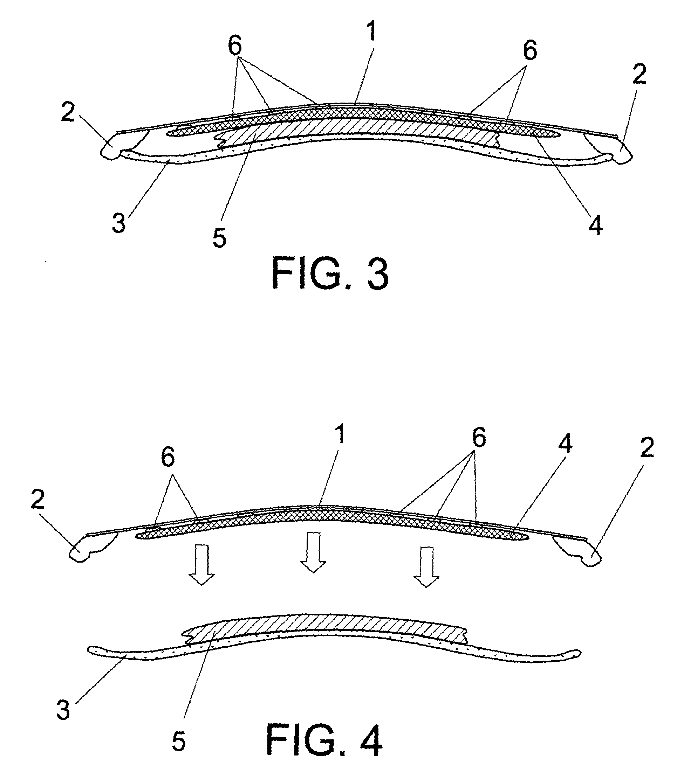

As has also been mentioned and as shown in figure 4, the self supporting liner (3), whether as an independent element or together with the union or absorption element (5), can be separated and thereby removed from the damping element (4), which is permanently secured by adhesive (6) to the vehicle body (1). This further allows assembling the lining (3) so that the original situation is recovered, without any loss in performance of these components.

## Claims

1. Acoustic vehicle roof, applicable mainly to motor vehicles with a decorative internal roof which consists of a preferably self supporting liner, **characterised in that** in addition to said self supporting liner (3) it includes a damping element (4) meant to be directly attached to the vehicle body (1) and a flexible element (5) which is placed between self supporting liner (3) and the damping element (4), joining the two, with the three parts forming a pre-assembled unit outside the vehicle which is later attached to the vehicle roof by pressure, adhesives and additional means of attachment.

2. Acoustic vehicle roof, as claimed in claim 1, **characterised in that** the assembly formed by the self supporting liner (3), the intermediate element (5) and the damping element (4) is attached by means of the latter with an adhesive (6) which permanently joins said damping element (4) to the vehicle body.

3. Acoustic vehicle roof, as claimed in previous claims, **characterised in that** the union of absorption element (5) to the self-supporting element (3) and to the damping element (4) is weaker than the union achieved by adhesive (6) which joins the damping element (4) to the body (1) of the vehicle, thereby allowing after the unit is assembled and mounted to separate or remove the self supporting liner (3) independently or together with the absorbing element (5) from the damping element (4), which remains attached to the vehicle body (1).

4. Acoustic vehicle roof, as claimed in previous claims, **characterised in that** the damping element provides a means to improve the acoustic and vibrational properties of the assembly, while intermediate element (5) which joins the damping element (4) and the self-supporting liner (3) provides a spacing element which due to its flexibility in all directions simplifies the assembly of the unit and improves the transmission of forces required to adhere the damping element (4) to the vehicle roof.
